(19) Europäisches Patentamt
European Patent Office
Office européen des brevets

(11) **EP 4 043 214 A1**

(12) **EUROPEAN PATENT APPLICATION**
published in accordance with Art. 153(4) EPC

(43) Date of publication:
**17.08.2022 Bulletin 2022/33**

(21) Application number: **20873799.9**

(22) Date of filing: **26.08.2020**

(51) International Patent Classification (IPC):
**B32B 27/34** (2006.01)   **B65D 65/40** (2006.01)
**C08L 77/02** (2006.01)   **C08L 77/06** (2006.01)

(52) Cooperative Patent Classification (CPC):
**B32B 27/34; B65D 65/40; C08L 77/02; C08L 77/06**

(86) International application number:
**PCT/JP2020/032244**

(87) International publication number:
**WO 2021/070500 (15.04.2021 Gazette 2021/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.10.2019 JP 2019186064**

(71) Applicant: **TOYOBO CO., LTD.**
**Osaka-shi**
**Osaka 5300001 (JP)**

(72) Inventors:
• **GOTO, Takamichi**
**Inuyama-shi Aichi 484-8508 (JP)**
• **ENDO, Takuro**
**Inuyama-shi Aichi 484-8508 (JP)**

(74) Representative: **Vossius & Partner**
**Patentanwälte Rechtsanwälte mbB**
**Siebertstraße 3**
**81675 München (DE)**

(54) **BIAXIALLY STRETCHED POLYAMIDE FILM AND LAMINATED BODY**

(57) It is provided that a biaxially stretched polyamide film that is excellent in oxygen gas barrier property, impact resistance, and bending fatigue resistance, which are film qualities necessary for a packaging film and that is carbon-neutral by using a raw material derived from biomass; and a laminated body using the biaxially stretched polyamide film. A biaxially stretched polyamide film in which a resin layer (layer B) mainly composed of an aliphatic polyamide resin is laminated on at least one surface of a resin layer (layer A) mainly composed of a m-xylylene group-containing-polyamide polymer, wherein the biaxially stretched polyamide film satisfies the following requirements (1) to (3): (1) the resin layer (layer A) contains not lower than 70% by mass of the m-xylylene group-containing-polyamide polymer; (2) the resin layer (layer B) mainly composed of the aliphatic polyamide resin contains at least 99 to 60% by mass of polyamide 6 and 1 to 34% by mass of a polyamide polymerized from a biomass-derived raw material; and (3) a thickness of the layer A is not lower than 10% and not higher than 30% of a total thickness of the layer A and the layer B.

EP 4 043 214 A1

**Description**

TECHNICAL FIELD

The present invention relates to a biaxially stretched polyamide film: that includes a resin polymerized from a raw material derived from a biomass (an organic matter resource derived from an organism such as a plant); that is excellent in oxygen gas barrier property, impact resistance, and bending fatigue resistance; that, when used as a packaging material for food packaging or the like, has effects of preventing alteration of contents and protecting contents from vibration and impact during transportation of products; and that is suitable for various packaging applications. The present invention also relates to a laminated body using the biaxially stretched polyamide film.

BACKGROUND ART

Conventionally, a film formed of a polyamide polymer having xylylene diamine as a component is excellent in oxygen gas barrier property and excellent heat resistance, and has high film strength when compared with a film formed of another polymer component.

Meanwhile, an unstretched film and a stretched film formed of aliphatic polyamides represented by polyamide 6 and polyamide 66 are excellent in impact resistance and bending fatigue resistance, and are widely used as various packaging materials.

With respect to the conventional films above, the former film formed of a polyamide polymer having xylylene diamine as a component has a problem that, when used as a packaging material that requires bending fatigue resistance, pinholes due to bending fatigue easily occur in a processing step of performing vacuum packaging, etc., and during transportation of products. When pinholes occur in the packaging material of a product, contamination due to leakage of contents, decomposition of the contents, occurrence of molds, and the like are caused, leading to a decrease in the value of the product.

Meanwhile, the latter film formed of an aliphatic polyamide has excellent film characteristics such as impact resistance and bending fatigue resistance, but has a problem that the oxygen gas barrier property is inferior.

In order to solve these problems, methods in which a polyamide polymer having xylylene diamine as a component and an aliphatic polyamide or the like are melt-extruded by separate extruders and are laminated together, and then the resultant matter is biaxially stretched, have been proposed (see Patent Literatures 1 to 4, for example).

However, the technologies described in these patent literatures are not at a satisfactory level in terms of both good product preservability and protection against impact and bending during transportation. In the case of the method of Patent Literature 2, in order to obtain a film that satisfies good oxygen gas barrier property and bending fatigue resistance, it is necessary to use a large amount of a polyamide polymer having xylylene diamine as a component, and thus, the method of Patent Literature 2 is not a desirable method when reduction of packaging and distribution cost is required. Patent Literature 3 discloses a film that satisfies gas barrier property and bending fatigue resistance. In the film disclosed in Patent Literature 3, a resin layer formed of an aliphatic polyamide and a bending fatigue resistance modifier is laminated on at least one surface of a gas barrier resin layer formed of a polyamide having xylylene diamine as a main component. However, Patent Literature 3 indicates that, in order to satisfy gas barrier property, the ratio of the gas barrier resin layer is required to be not lower than 40%. The present inventors evaluated the bending fatigue resistance under a severe condition using the film of Patent Literature 3, but the result was not satisfactory. Patent Literature 4 discloses a film that realizes both of bag breakage prevention and bending fatigue resistance. In the film disclosed in Patent Literature 4, a resin layer formed of a mixed polyamide composed of an aliphatic polyamide and a semi-aromatic polyamide is laminated on at least one surface of a resin layer formed of an aliphatic polyamide and a thermoplastic elastomer. However, even by using this method, a gas barrier film having bending fatigue resistance could not be obtained. In terms of prevention of alteration of contents against vibration, impact, friction, etc., during transportation of a packaging material, which is particularly important in the mode of food distribution nowadays, there are still concerns left in the methods described in the above-mentioned publications.

With respect to these problems, for example, Patent Literature 5 discloses a polyamide-based laminated biaxially stretched film in which a resin layer (layer B) mainly composed of an aliphatic polyamide resin is laminated on at least one surface of a resin layer (layer A) mainly composed of a m-xylylene group-containing-polyamide polymer that has m-xylylene diamine or a mixed xylylene diamine composed of m-xylylene diamine and p-xylylene diamine, as a main diamine component, and that **has a** $\alpha, \omega$-aliphatic dicarboxylic acid component having 6 to 12 carbon atoms, as a main dicarboxylic acid component. According to this technology, it is possible to obtain a polyamide-based laminated biaxially stretched film: that is excellent in oxygen gas barrier property, impact resistance, and bending fatigue resistance, which are film qualities necessary for a packaging film; that, when used as various packaging materials, prevents alteration and discoloration of contents; and further, that is suitable for packaging applications that are also effective for protection of the quality of contents and prevention of product bag breakage due to vibration, impact, etc., during transportation.

Meanwhile, in recent years, in association with increasing demand for construction of a recycling society, stop of use of fossil fuels is desired in the material fields as well, as in the case of energy, and use of biomass is attracting attention. Biomass is an organic compound photosynthesized from carbon dioxide and water. Therefore, when biomass is used, biomass becomes carbon dioxide and water again, and thus, biomass is a so-called carbon-neutral material (the discharged amount and the absorbed amount of carbon dioxide in the environment are the same, and thus, increase of carbon dioxide being a greenhouse effect gas can be suppressed). In recent years, the practical use of biomass plastics made from these biomass raw materials has rapidly advanced, and attempts have been made to produce polyester, which is a general-purpose polymer material, from these biomass raw materials.

For example, in the field of polyester film, Patent Literature 6 discloses: a resin composition that contains a polyester composed of a diol unit and a dicarboxylic acid unit and in which a polyester containing ethylene glycol derived from biomass as the diol component unit and a dicarboxylic acid derived from fossil fuel such as petroleum as the dicarboxylic acid component unit is contained in 50 to 95% by mass with respect to the entire resin composition; and a film.

According to this technology, even with a polyester produced by using ethylene glycol derived from biomass instead of conventional ethylene glycol obtained from fossil fuel, mechanical properties equivalent to those in the case where conventional ethylene glycol derived from fossil fuel is used are obtained.

In such a background, in the aforementioned polyamide films as well, a carbon-neutral material using a raw material derived from biomass is desired.

CITATION LIST

PATENT LITERATURE

[PTL 1] Japanese Laid-Open Patent Publication No. H6-255054
[PTL 2] Japanese Laid-Open Patent Publication No. 2003-11307
[PTL 3] Japanese Laid-Open Patent Publication No. 2001-341253
[PTL 4] Japanese Laid-Open Patent Publication No. 2006-205711
[PTL 5] Japanese Laid-Open Patent Publication No. 2009-119843
[PTL 6] Japanese Laid-Open Patent Publication No. 2012-097163

SUMMARY OF THE INVENTION

PROBLEMS TO BE SOLVED BY THE INVENTION

The present invention has been devised in consideration of the problems of such conventional technologies. That is, the present invention is directed to providing a biaxially stretched polyamide film: that solves the problems of the above-described conventional polyamide-based laminated biaxially stretched films; that is excellent in oxygen gas barrier property, impact resistance, and bending fatigue resistance, which are film qualities necessary for a packaging film; that, when used as various packaging materials, prevents alteration and discoloration of contents; further, that is suitable for packaging applications that are effective for protection of the quality of contents and prevention of product bag breakage due to vibration, impact, etc., during transportation; and further, that is carbon-neutral by using a raw material derived from biomass. The present invention is also directed to providing a laminated body using the biaxially stretched polyamide film.

SOLUTIONS TO THE PROBLEMS

That is, the present invention has the following configuration.

[1] A biaxially stretched polyamide film in which a resin layer (layer B) mainly composed of an aliphatic polyamide resin is laminated on at least one surface of a resin layer (layer A) mainly composed of a m-xylylene group-containing-polyamide polymer that has m-xylylene diamine or a mixed xylylene diamine composed of m-xylylene diamine and p-xylylene diamine, as a main diamine component, and that **has an** $\alpha,\omega$-aliphatic dicarboxylic acid component having 6 to 12 carbon atoms, as a main dicarboxylic acid component,
wherein the biaxially stretched polyamide film satisfies the following requirements (1) to (3):

(1) the resin layer (layer A) mainly composed of the m-xylylene group-containing-polyamide polymer contains not lower than 70% by mass of the m-xylylene group-containing-polyamide polymer;

(2) the resin layer (layer B) mainly composed of the aliphatic polyamide resin contains at least 99 to 60% by mass of polyamide 6 and 1 to 34% by mass of a polyamide polymerized from a biomass-derived raw material; and
(3) a thickness of the layer A is not lower than 10% and not higher than 30% of a total thickness of the layer A and the layer B.

[2] The biaxially stretched polyamide film according to the above [1], wherein
a content (biomass degree) of biomass-derived carbon, according to radiocarbon ($C^{14}$) measurement, relative to all carbon in the biaxially stretched polyamide film is 0.5 to 30%.
[3] The biaxially stretched polyamide film according to the above [1] or [2], wherein a polyamide resin polymerized from the biomass-derived raw material is at least one type of polyamide resin selected from the group consisting of polyamide 11, polyamide 410, polyamide 610, and polyamide 1010.
[4] The biaxially stretched polyamide film according to any one of the above [1] to [3], wherein the biaxially stretched **polyamide film has a thickness of 8 to 50 μm.**
[5] A laminated body in which a sealant film is laminated on the biaxially stretched polyamide film according to any one of the above [1] to [4].
[6] The laminated body according to the above [5], wherein the number of pinholes when a bending test is continuously performed for 2000 cycles at a speed of 40 cycles per minute using a gelbo flex tester under an atmosphere having a temperature of 23°C and a relative humidity of 50% is not larger than 10.
[7] The laminated body according to the above [5] or [6], wherein oxygen permeability at a temperature of 23°C and a relative humidity of 65% is not higher than 150 ml/m$^2$·MPa·day.
[8] A packaging bag using the laminated body according to any one of the above [5] to [7].

EFFECT OF INVENTION

With regard to the biaxially stretched polyamide film and the laminated body using the same of the present invention, a carbon-neutral polyamide film using a biomass-derived resin can be obtained by blending a specific biomass-derived polyamide resin and adopting a specific film forming condition. In addition, the biaxially stretched polyamide film and the laminated body have excellent oxygen gas barrier property, good impact resistance, and good bending fatigue resistance, are effective for prevention of alteration and discoloration of contents in food packaging and the like, further, can protect contents from bending fatigue due to impact and vibration during transportation, and can be effectively used as various packaging materials.

DESCRIPTION OF EMBODIMENTS

Hereinafter, a biaxially stretched polyamide film and a laminated body using the same according to an embodiment of the present invention will be described in detail.
The biaxially stretched polyamide film of the present invention is a biaxially stretched polyamide film in which a resin layer (layer B) mainly composed of an aliphatic polyamide resin is laminated on at least one surface of a resin layer (layer A) mainly composed of a m-xylylene group-containing-polyamide polymer.

<Resin layer (layer A) mainly composed of m-xylylene group-containing-polyamide polymer>

A resin layer (layer A) mainly composed of a m-xylylene group-containing-polyamide polymer contains not lower than 70% by mass, preferably not lower than 90% by mass, and more preferably not lower than 99% by mass, of a m-xylylene group-containing-polyamide polymer that has m-xylylene diamine or a mixed xylylene diamine composed of m-xylylene diamine and p-xylylene diamine, as a main diamine component, and that **has an α, ω-aliphatic dicarboxylic acid component having 6 to 12 carbon atoms, as a main dicarboxylic acid component.
In the m-xylylene group-containing-polyamide polymer used for the layer A of the biaxially stretched polyamide film of the present invention, that has m-xylylene diamine or a mixed xylylene diamine composed of m-xylylene diamine and p-xylylene diamine, as a main diamine component, and that **has an α, ω-aliphatic dicarboxylic acid having 6 to 12 carbon atoms, as a main dicarboxylic acid component, p-xylylene diamine is preferably not higher than 30 mol% of all the xylylene diamines. The structural unit composed of the xylylene diamine and the aliphatic dicarboxylic acid contains preferably at least not lower than 70 mol% in the molecular chain of the m-xylylene group-containing-polyamide polymer.
Examples of the m-xylylene group-containing-polyamide polymer used in the layer A in the present invention include, for example: homopolymers such as poly(m-xylylene adipamide) (this may be abbreviated as polyamide MXD6), poly(m-xylylene pimelamide), poly(m-xylylene suberamide), poly(m-xylylene azelamide), poly(m-xylylene sebacamide), and poly(m-xylylene dodecanediamide); copolymers such as a m-xylylene/p-xylylene adipamide copolymer, a m-xylylene/p-xylylene pimelamide copolymer, a m-xylylene/p-xylylene suberamide copolymer, a m-xylylene/p-xylylene azelamide copolymer, a m-xylylene/p-xylylene sebacamide copolymer, and a m-xylylene/p-xylylene dodecanediamide copolymer; and copolymers in which some of the components of these homopolymers or copolymers are copolymerized with an aliphatic diamine such as hexamethylene diamine, an alicyclic diamine such as piperazine, an aromatic diamine such as p-bis-(2-aminoethyl)benzene, an aromatic **dicarboxylic acid such as terephthalic acid, a lactam such as ε-caprolactam, an** ω-aminocarboxylic acid such as aminoheptanoic acid, an aromatic aminocarboxylic acid such as p-aminomethylbenzoic acid, or the like.

<Resin layer (layer B) mainly composed of aliphatic polyamide resin>

The aliphatic polyamide resin used in the layer B of the biaxially stretched polyamide film of the present invention contains at least 99 to 60% by mass of polyamide 6, and 1 to 34% by mass of a polyamide polymerized from a biomass-derived raw material.

When polyamide 6 contained in the layer B of the biaxially stretched polyamide film of the present invention accounts for less than 60% by mass, mechanical strengths such as impact strength may become low. Meanwhile, when the polyamide polymerized from the biomass-derived raw material accounts for less than 1% by mass, the amount of the biomass-derived raw material contained in the biaxially stretched polyamide film is small, and thus, requirements for a carbon-neutral material are not satisfied. When more than 34% by mass of the polyamide polymerized from the biomass-derived raw material is contained, impact strength may decrease or uniformity of the film may be impaired.

Polyamide 6 used in the layer B of the present invention is a polyamide resin having ε-caprolactam as a lactam unit. Such a polyamide resin to be used is obtained, in general, by allowing ε-caprolactam to undergo ring-opening polymerization or an aminocaproic acid to undergo polycondensation, and then removing remaining monomers and low molecular weight matter from the resultant matter through hot water extraction. In general, polyamide 6 is polymerized from ε-caprolactam which is a raw material derived from fossil fuel.

The relative viscosity of polyamide 6 is preferably 2.0 to 3.5. The relative viscosity of a polyamide-based resin influences toughness, spreadability, and the like of an obtained biaxially stretched film. This is because the biaxially stretched film has a tendency that: when the relative viscosity is less than 2.0, impact strength tends to be insufficient; and reversely, when the relative viscosity exceeds 3.5, sequential biaxial stretchability is impaired due to increase in stretching stress. The relative viscosity in the present invention denotes a value obtained by performing measurement at 25°C using a solution in which 0.5 g of the polymer is dissolved in 50 ml of 97.5% sulfuric acid.

As the polyamide polymerized from a biomass-derived raw material and used in the layer B in the present invention, polyamide 11, polyamide 610, polyamide 1010, and polyamide 410 are preferable in terms of availability.

The polyamide 11 is a polyamide resin having a structure in which a monomer having 11 carbon atoms is bonded via an amide bond. Polyamide 11 is usually obtained using aminoundecanoic acid or undecane lactam as a monomer. In particular, aminoundecanoic acid is preferable from the viewpoint of environmental protection (particularly from the viewpoint of carbon neutrality) since aminoundecanoic acid is a monomer obtained from castor oil. The proportion of the structural units derived from these monomers having 11 carbon atoms is preferably not less than 50% of all the structural carbon in the polyamide 11.

The polyamide 11 is normally manufactured through ring-opening polymerization of undecane lactam described above. Normally, lactam monomers are removed by hot water from the polyamide 11 obtained through ring-opening polymerization, and the resultant matter is dried and then melt-extruded by an extruder.

The polyamide 610 is a polyamide resin having a structure in which a monomer having 6 carbon atoms and a monomer having 10 carbon atoms are bonded via an amide bond. Polyamide 610 is usually obtained through copolymerization of a diamine and a dicarboxylic acid, and hexamethylene diamine and sebacic acid are used, respectively. Sebacic acid is preferable from the viewpoint of environmental protection (particularly from the viewpoint of carbon neutrality) since sebacic acid is a monomer obtained from castor oil. The total proportion of the structural unit derived from the monomer having 6 carbon atoms and the structural unit derived from the monomer having 10 carbon atoms is preferably not less than 50% of all the structural carbon in the polyamide 610.

The polyamide 1010 is a polyamide resin having a structure in which a diamine having 10 carbon atoms and a dicarboxylic acid having 10 carbon atoms are copolymerized. Usually, 1,10-Decanediamine (Decamethylenediamine) and sebacic acid are used for the polyamide 1010. Decamethylenediamine and sebacic acid are preferable from the viewpoint of environmental protection (particularly from the viewpoint of carbon neutrality) since decamethylenediamine and sebacic acid are monomers obtained from castor oil. The total proportion of the structural units derived from the diamine having 10 carbon atoms and the structural units derived from the dicarboxylic acid having 10 carbon atoms is preferably not less than 50% of all the structural units in the polyamide 1010.

The above polyamide 410 is a polyamide resin having a structure in which a monomer having 4 carbon atoms and a diamine having 10 carbon atoms are copolymerized. Usually, sebacic acid and tetramethylenediamine are used for the polyamide 410. As sebacic acid, one produced from castor oil derived from a vegetable oil, is preferable from an environmental point of view. As the sebacic acid used here, one obtained from castor oil is desirable from the viewpoint of environmental protection (particularly from the viewpoint of carbon neutrality).

The relative viscosity of the polyamide polymerized from the biomass-derived raw material is preferably 1.8 to 4.5, and more preferably 2.4 to 3.2. When the relative viscosity is less than 1.8, impact strength of the film tends to be insufficient. When the relative viscosity is larger than 4.5, load on the extruder tends to be increased. This range facilitates kneading with a polyamide 6 resin by the extruder.

Other polyamide resins may be added to the layer B as needed.

Examples of another polyamide resin can include polyamide resins obtained through polycondensation of, for example, a lactam of a three-or more-**membered ring, an** ω-amino acid, or a dibasic acid and a diamine. Specifically, examples of the lactams can include **enantholactam, capryllactam, and lauryl lactam in addition to the aforementioned** ε-caprolactam. **Examples of the** ω-amino acids can include 6-aminocaproic acid, 7-aminoheptanoic acid, 9-aminononanoic acid, and 11-aminoundecanoic acid. Examples of the dibasic acids can include adipic acid, glutaric acid, pimelic acid, suberic acid, azelaic acid, sebacic acid, undecanedioic acid, dodecadioic acid, hexadecadioic acid, eicosanedioic acid, eicosadienedioic acid, and 2,2,4-trimethyladipic acid. Further, examples of the diamines can include ethylenediamine, trimethylenediamine, tetramethylenediamine, hexamethylene diamine, pentamethylenediamine, undecamethylenediamine, 2,2,4(or 2,4,4)-trimethylhexamethylenediamine, cyclohexanediamine, bis-(4,4'-aminocyclohexyl)methane, and the like.

In addition, a small amount of aromatic dicarboxylic acid, such as, for example, terephthalic acid, isophthalic acid, 2,6-naphthalenedicarboxylic acid, xylylene dicarboxylic acid, etc., or a small amount of aromatic diamine, such as, for example, m-xylylene diamine, can be contained. Then, polymer or copolymer obtained through polycondensation of these, such as, polyamide 6, polyamide 7, polyamide 11, polyamide 12, polyamide 66, polyamide 69, polyamide 611, polyamide 612, polyamide 6T, polyamide 6I, polyamide MXD6 (poly(m-xylylene adipamide)), polyamide 6/66, polyamide 6/12, polyamide 6/6T, polyamide 6/6I, and polyamide 6/MXD6 can be used.

Preferably, the relative viscosity of another polyamide resin described above is 1.8 to 4.5. This range facilitates kneading with a polyamide 6 resin and a polyamide resin polymerized from a biomass-derived raw material.

A thermoplastic elastomer can be added to the layer B mainly composed of the aliphatic polyamide resin and forming a skin layer as needed. The lower limit of the amount of the thermoplastic elastomer added in the aliphatic polyamide resin is preferably not lower than 0.5% by mass, more preferably not lower than 1.0% by mass, and particularly preferably not lower than 2.0% by mass. The upper limit is preferably not higher than 8.0% by mass, more preferably not higher than 7.0% by mass, and particularly preferably not higher than 6.0% by mass. When the addition amount of the thermoplastic elastomer is lower than 0.5% by mass, the improving effect of bending fatigue resistance may fail to be obtained. Reversely, when the addition amount of the thermoplastic elastomer exceeds 8.0% by mass, the biaxially stretched polyamide film may fail to be suitable for applications for packaging foods, etc., for which high transparency (haze) is required. Further, a resin other than the thermoplastic elastomer and the aliphatic polyamide resin can be filled in the resin forming the skin layer as needed, and a lubricant, an anti-blocking agent, a thermal stabilizer, an antioxidant, an antistatic agent, a light resisting agent, an impact resistance modifier, etc. can also be filled in the resin forming the skin layer as needed.

As the thermoplastic elastomer, for example, a polyamide-based elastomer such as a block or random copolymer of a polyamide resin such as polyamide 6 or polyamide 12 and PTMG (polytetramethylene glycol), PEG (polyethylene glycol), or the like; a polyolefin-based elastomer such as an ethylene-acrylic acid copolymer, an ethylene-methacrylic acid copolymer, a copolymer of ethylene and butane, or a copolymer of styrene and butadiene; an ionomer of an olefin-based resin such as an ethylene-based ionomer; or the like, can be suitably used.

Meanwhile, other resin such as a polyamide-based resin or a thermoplastic elastomer can be mixed as needed in the layer A mainly composed of the m-xylylene-containing-polyamide polymer and forming a core layer. However, when a resin other than the m-xylylene-containing-polyamide polymer is mixed in the resin forming the core layer, the content ratio of the m-xylylene-containing-polyamide polymer needs to be not lower than 99% by mass, preferably 100% by mass, and the content ratio of the other resin needs to be less than 1% by mass, in order to obtain good gas barrier property. In particular, when a thermoplastic elastomer is mixed, the content ratio needs to be lower than 1% by mass. When the relatively soft skin layer having the aliphatic polyamide resin as a main component is provided on the outer side of the hard core layer having the m-xylylene-containing-polyamide polymer as a main component and the thermoplastic elastomer is filled in the skin layer, good gas barrier property can be exhibited due to the m-xylylene-containing-polyamide polymer, and at the same time, good improving effect of bending fatigue resistance due to the thermoplastic elastomer and the polyamide-based resin can be exhibited.

A lubricant, an anti-blocking agent, a thermal stabilizer, an antioxidant, an antistatic agent, a light resisting agent, an impact resistance modifier, etc., can be filled in the resin forming the layer A as needed.

The layer configuration of the biaxially stretched polyamide film of the present invention is preferably A/B (two kinds and two layers), B/A/B(two kinds and three layers), or B1/A/B2 (three kinds and three layers, when the layer B1 and the layer B2 mainly composed of aliphatic polyamide resins are different resin layers). In terms of curling, the B/A/B configuration being a symmetric layer configuration is particularly preferable.

In the description below, the layer A formed of a resin mainly composed of the m-xylylene group-containing-polyamide polymer (i.e., the layer A in the case of the layer configuration of B/A/B or B1/A/B2), and the layer A in the case of the configuration of two kinds and two layers are also referred to as a core layer. The layer B mainly composed of the aliphatic polyamide resin (i.e., as in B/A/B, or the layer B1 and layer B2 in the case of the layer configuration of B1/A/B2), and the layer B in the case of the configuration of two kinds and two layers are also referred to as a skin layer.

With respect to the thickness ratio of each layer of the biaxially stretched polyamide film of the present invention, the lower limit of the thickness ratio of the layer A is preferably not lower than 10%, more preferably not lower than 15%, and particularly preferably not lower than 18%. The upper limit of the thickness ratio of the layer A is preferably not higher than 30%, more preferably not higher than 25%, and particularly preferably not higher than 23%. The lower limit of the thickness ratio of the layer B or of the layer B1 and the layer B2 is preferably not lower than 70%, more preferably not lower than 75%, and particularly preferably not lower than 77%. The upper limit of the thickness ratio of the layer B or of the layer B1 and the layer B2 is preferably not higher than 90%, more preferably not higher than 85%, and particularly preferably not higher than 82%. In the case of the B/A/B configuration of two kinds and three layers, the thickness ratio of the layer B serving as the outer layers means the sum of the thickness ratios of both outer layers. In the case of the B1/A/B2 configuration of three kinds and three layers, the thickness ratio of the layer B1 and the layer B2 serving as the outer layers means the sum of the thickness ratios of both outer layers. When the thickness ratio of the layer A exceeds 30%, bending fatigue resistance tends to be deteriorated and the number of pinholes tends to be increased, which is not preferable. Meanwhile, when the thickness ratio of the layer A is lower than 10%, gas barrier property tend to be deteriorated, which is not preferable.

With respect to the biaxially stretched polyamide film of the present invention, the number of pinholes is preferable not larger than 10, and of course most preferably 0, when a laminate film is **obtained by laminating the biaxially stretched polyamide film with a 40 $\mu$m-**thick polyethylene film, and the laminated film is continuously subjected to 2000 cycles of a bending test at a speed of 40 cycles per minute with use of a gelbo flex tester under an atmosphere having a temperature of 23°C and a relative humidity of 50%, according to the method described below.

The measurement method of the number of pinholes mentioned above is as follows. The film laminated with a polyolefin film or the like and cut into a predetermined size (20.3 cm×27.9 cm) is conditioned for a predetermined time at a predetermined temperature, and then, the resultant rectangular test film is wound into a cylindrical shape having a predetermined length. Then, both ends of the cylindrical film are fixed to the outer periphery of a disc-shaped fixed head and the outer periphery of a disc-shaped movable head of the gelbo flex tester. Then, a bending test is performed repeatedly and continuously for a predetermined number of cycles (2000 cycles) at a predetermined speed (40 cycles per minute). One cycle of the bending test consists of the following: while the movable head is moved by a predetermined length (7.6 cm) in the direction toward the fixed head along an axis between both heads opposed to each other in parallel, the movable head is rotated by a predetermined angle (440°); then, the movable head is linearly moved by a predetermined length (6.4 cm) without rotation; and then, these actions are reversed to move the movable head back to the initial position. Then, the number of pinholes generated in the portion, of the tested film, in a predetermined range (497 cm$^2$) excluding the portions fixed to the outer peripheries of the fixed head and the movable head, is counted.

When the number of pinholes is in the above-described range, the biaxially stretched polyamide film of the present invention can effectively exhibit the effect of preventing deterioration of quality and leakage of contents due to occurrence of fine holes or bag breakage, caused by vibration, impact, etc., during transportation of a gas barrier packaging material using the biaxially stretched polyamide film. The number of pinholes is more preferably not larger than 8, and particularly preferably not larger than 6.

As means for reducing the number of pinholes in the laminated body using biaxially stretched polyamide film of the present invention to be not larger than 10, as mentioned above, this can be achieved by making the resin layer (layer A) having the m-xylylene group-containing-polyamide polymer as a main component as thin as possible and by containing the thermoplastic elastomer as appropriate in the resin layer (layer B) having the aliphatic polyamide resin as a main component.

With respect to the laminated body using the biaxially stretched polyamide film of the present invention, the oxygen permeability at a temperature of 23°C and a relative humidity of 65% is preferably not higher than 150 ml/m$^2$·MPa·day.

When the oxygen permeability is in the above-described range, the effect of preventing deterioration of quality of contents at the time when the gas barrier packaging material using the biaxially stretched polyamide film of the present invention is preserved for a long time, can be effectively exhibited. The oxygen permeability is more preferably not higher than 130 ml/m$^2$·MPa·day, and particularly preferably not higher than 110 ml/m$^2$·MPa·day. The lower limit of the oxygen permeability of the laminated body of the present invention is substantially about 60 ml/m$^2$·MPa·day, due to the limitation of the gas barrier property of the m-xylylene group-containing-polyamide polymer itself.

As means for reducing the oxygen permeability of the laminated body using the biaxially stretched polyamide film of the present invention to be not higher than 150 ml/m$^2$·MPa·day, as mentioned above, this can be achieved by making the content of m-xylylene group-containing-polyamide polymer in the resin layer (layer A) having the m-xylylene group-containing-polyamide polymer as a main component as high as possible and adjusting the ratio of the thickness of the layer A as appropriate in a range of 10 to 30% of the entire thickness of the film.

The biaxially stretched polyamide film of the present invention is a biaxially stretched film: that is excellent in elastic recovery in an environment of an ordinary temperature or a low temperature; that is excellent in impact resistance and bending fatigue resistance; that has good suitability for processing such as printing and lamination; and that is suitable as various packaging materials.

The thickness of the biaxially stretched polyamide film of the present invention is not limited in particular. However, when used as a packaging material, the thickness of the biaxially stretched polyamide film is preferably 8 to 50 μm, and he thickness of the biaxially stretched polyamide film is more preferably **10 to 30 μm, in general.**

The content (biomass degree) of biomass-derived carbon relative to all carbon in the biaxially stretched polyamide film of the present invention is preferably 0.5 to 30%. The content of the biomass-derived carbon relative to all carbon is according to radiocarbon ($C^{14}$) measurement shown in Examples. When the biomass degree is lower than 0.5%, requirements for a carbon-neutral material are not satisfied. Meanwhile, when the biomass degree is higher than 30%, the content of polyamide 6 serving as the main component of the layer B is decreased. Thus, impact strength of the biaxially stretched polyamide film may decrease or uniformity of the film may be impaired.

The biaxially stretched polyamide film of the present invention can be manufactured by the following manufacturing methods. For example, a method in which polymers forming the respective layers are melted by using separate extruders, and co-extruded from a single die to manufacture the biaxially stretched polyamide film; a method in which polymers forming the respective layers are separately melt-extruded into film shapes, and laminated by a lamination method to manufacture the biaxially stretched polyamide film; or a method combining these, can be adopted. It is preferable that the method in which polymers forming the respective layers are melted by using separate extruders, and co-extruded from a single die to manufacture the biaxially stretched polyamide film. As a stretching method, a method such as a flat-type sequential biaxial stretching method, a flat-type simultaneous biaxial stretching method, or a tubular method can be used, the flat-type sequential biaxial stretching method is preferable. Here, manufacturing of the film according to a melt co-extrusion method and a flat-type sequential biaxial stretching method is described as an example.

Raw material resins are melt-extruded from two extruders according to a co-extrusion method and are joined in a feed block, and the resultant matter is extruded into a film shape from a T-die, is supplied onto a cooling roll, and is cooled, whereby an unstretched film having a lamination configuration of two kinds and three layers of layer B/layer A/layer B is obtained. At this time, the resin melting temperature at each extruder is arbitrarily selected in a range of the melting point of the resin forming the corresponding layer + 10°C to 50°C. In terms of uniformity of the film thickness and prevention of deterioration of the resin, in the case of the layer A formed of the m-xylylene group-containing-polyamide polymer, a range of 245 to **290°C, and preferably 255 to 280°C, is preferred, and in the case of the layer B formed of the** aliphatic polyamide resin, a range of 230 to 280°C, and preferably 250°C to 270°C, is preferred. The obtained unstretched sheet is led to a roll-type longitudinal stretching machine, and is stretched using the speed difference between rolls, in the longitudinal direction 2.0 to 5.0 times and preferably 3.0 to 4.0 times at a temperature in a range of 65 to 100°C and preferably in a range of 80 to 90°C. Then, the obtained stretched sheet is led to a tenter-type transverse stretching machine, is subjected to transverse stretching 3.0 to 6.0 times and preferably 3.5 to 4.0 times at a temperature in a range of 80 to 140°C and preferably in a range of 100 to 130°C, and then, is subjected to heat setting in a range of 180 to 230°C and preferably in a range of 200 to 220°C, and to relaxation treatment in a range of 0 to 8% and preferably in a range 2 to 9%, whereby the biaxially stretched polyamide film is obtained.

The biaxially stretched polyamide film of the present invention can also contain, as long as characteristics thereof are not hindered, various additives such as a lubricant, an anti-blocking agent, a thermal stabilizer, an antioxidant, an antistatic agent, a light resisting agent, and an impact resistance modifier. In particular, in order to improve slipperiness of the biaxially stretched film, the biaxially stretched polyamide film preferably contains various inorganic particles. Addition of an organic lubricant such as ethylene bis stearic acid that exhibits an effect of reducing surface energy is preferred because slipperiness of the film forming a film roll becomes excellent.

Further, the biaxially stretched polyamide film of the present invention can also be subjected to heat treatment and humidity control treatment in order to improve dimensional stability depending on the application. In addition, in order to improve adhesiveness of the film surface, corona treatment, coating treatment, flame treatment, and the like can be performed. In addition, printing processing, and vapor deposition processing of a metal matter, an inorganic oxide, or the like can also be performed. As a vapor-deposited film formed by vapor deposition processing, a vapor-deposited film of aluminum, or a vapor-deposited film of a single matter of a silicon oxide or aluminum oxide or a mixture thereof is suitably used. Further, when a protection layer or the like is coated on such a vapor-deposited film, oxygen or hydrogen barrier property can be improved.

The gas-barrier polyamide film of the present invention is made into a laminated body by laminating a sealant film, etc., and then processed into a packing bag.

Examples of the sealant film include an unstretched linear low-density polyethylene film, an unstretched polypropylene film, and an ethylene-vinyl alcohol copolymer resin film.

The layer configuration of the laminated body in which the gas-barrier polyamide film of the present invention is used is not particularly limited as long as the gas-barrier polyamide film according to the embodiment of the present invention is included in the laminated body. In addition, the film used in the laminated body may be made of a petrochemical-derived raw material or a biomass-derived raw material, but is preferably made of polylactic acid, polyethylene terephthalate, polybutylene succinate, polyethylene, polyethylene furanoate, or the like, which is polymerized using a raw material derived from biomass, in terms of reducing the environmental load.

Examples of the layer configuration of the laminated body using the biaxially stretched polyamide film of the present invention include, when the layer boundary is expressed **by"/", for example: ONY/AD/LLDPE, ONY/AD/CPP, ONY/AD/Al/AD/CPP**, ONY/AD/Al/AD/LLDPE, ONY/PE/Al/AD/LLDPE, ONY/AD/Al/PE/LLDPE, PET/AD/ONY/AD/LLDPE, PET/AD/ONY/PE/LLDPE, PET/AD/ONY/AD/Al/AD/LLDPE, PET/AD/Al/AD/ONY/AD/LLDPE, PET/AD/Al/AD/ONY/PE/LLDPE, PET/PE/Al/PE/ONY/PE/LLDPE, PET/AD/ONY/AD/CPP, PET/AD/ONY/AD/Al/AD/CPP, PET/AD/Al/AD/ONY/AD/CPP, ONY/AD/PET/AD/LLDPE, ONY/AD/PET/PE/LLDPE, ONY/AD/PET/AD/CPP, ONY//Al//PET//LLDPE, ONY/AD/Al/AD/PET/PE/LLDPE, ONY/PE/LLDPE, ONY/PE/CPP, ONY/PE/Al/PE, ONY/PE/Al/PE/LLDPE, OPP/AD/ONY/AD/LLDPE, ONY/AD/EVOH/AD/LLDPE, ONY/AD/EVOH/AD/CPP, ONY/AD/ALUMINUM VAPOR DEPOSITION PET/AD/LLDPE, ONY/AD/ALUMINUM VAPOR DEPOSITION PET/AD/ONY/AD/LLDPE, ONY/AD/ALUMINUM VAPOR DEPOSITION PET/PE/LLDPE, ONY/PE/ALUMINUM VAPOR DEPOSITION PET/PE/LLDPE, ONY/AD/ALUMINUM VAPOR DEPOSITION PET/AD/CPP, PET/AD/ALUMINUM VAPOR DEPOSITION PET/AD/ONY/AD/LLDPE, CPP/AD/ONY/AD/LLDPE, ONY/AD/ALUMINUM VAPOR DEPOSITION LLDPE, ONY/AD/ALUMINUM VAPOR DEPOSITION CPP, and the like.

The abbreviations used in the above layer configurations are as follows.

ONY: the biaxially stretched polyamide film of the present invention; PET: stretched polyethylene terephthalate film; LLDPE: unstretched linear low density polyethylene film; CPP: unstretched polypropylene film; OPP: stretched polypropylene film; PE: extrusion-laminated or unstretched low density polyethylene film; Al: aluminum foil; EVOH: ethylene-vinyl alcohol copolymer resin; AD: adhesive layer that adheres films together; and ALUMINUM VAPOR DEPOSITION: indicating that aluminum is vapor-deposited.

EXAMPLES

The present invention is hereinafter described in more detail with reference to Examples, but the present invention is not restricted by the following Examples. Film was evaluated based on the following measurement method.

(1) Haze value of **film**

Haze of the film was measured with a direct reading haze meter manufactured by Toyo Seiki Seisaku-sho, Ltd. according to JIS-K-7105.

(2) Film thickness

A film was cut into 10 equal parts in the TD direction (as for a narrow film, the film was cut into equal parts such that a width that allows a measurement of a thickness can be ensured). The 10 films were stacked on top of each other, cut into a 100 mm film in the MD direction, and conditioned in an environment at a temperature of 23°C and a relative humidity of 65% for 2 hours or longer. A thickness at the center of each sample was measured with a thickness measurement device manufactured by TESTER SANGYO CO., LTD., and the average value of the measurements was used as a thickness.

(3) Biomass degree of film

The biomass degree of an obtained film was measured with radiocarbon ($C^{14}$) as described in Method B (AMS) of ASTM D6866-16.

(4) Heat shrinkage rate of film

The heat shrinkage rate of the film in MD direction and TD direction was measured by the following equation according to the dimensional change test method described in JIS C2318, except that the test temperature was set to 160°C and the heating time was set to 10 minutes.

$$\text{Heat shrinkage rate} = [(\text{length before treatment} - \text{length after treatment}) / \text{length before treatment}] \times 100 \, (\%)$$

(5) Impact strength of film

The impact strength was measured using a film impact tester manufactured by Toyo Seiki Seisaku-sho, Ltd. The measured value was converted into a value in terms of 15 **μm thickness and represented in** J **(joule)/15 μm.**

(6) Dynamic friction coefficient of film

The dynamic friction coefficient between the outer surfaces of film rolls was evaluated according to JIS-C2151 under the following conditions. The size of a test piece was 130 mm in width and 250 mm in length, and the test speed was 150 mm/min.

(7) Oxygen permeability (gas barrier property)

<Production of laminate film>

A polyester-based two-component adhesive (manufactured by Toyo-Morton, Ltd., TM590/CAT56=13/2 (parts by mass)) was applied in an application amount of 3 g/m$^2$ onto a **film produced in each Example, then, 40 μm of a linear low density polyethylene film** (**L**-LDPE film: manufactured by Toyobo Co., Ltd., L6102) was dry-laminated, and the resultant film was subjected to aging for three days in an environment of 40°C, to obtain a laminate film.
The laminate film obtained in the above was subjected to an atmosphere having a humidity of 65%RH and an air temperature of 25°C and purged with oxygen for two days, and then, the pudged laminate film was measured according to JIS-K-7126 (method B) using an oxygen permeability measurement apparatus (OX-TRAN 2/20: manufactured by MOCON Inc.). The measurement of the oxygen permeability was performed in a direction in which oxygen was transmitted from the polyamide film layer side to the linear low density polyethylene film layer side.

(8) Laminate strength

A laminated film made by a method similar to that described in the description of the bending pinhole resistance evaluation was cut into a strip shape having a width of 15 mm and a length of 200 mm. One end of the laminated film was peeled at the interface between the biaxially stretched polyamide film and the linear low density polyethylene film. The lamination strength was measured 3 times in the MD and TD directions, respectively, using an autograph (manufactured by Shimadzu Corporation) under a condition of a temperature of 23°C, a relative humidity of 50%, a tensile speed of 200 mm/minute, and a peeling angle of 90°. The lamination strength was evaluated by the average value of the measurements.

(9) Pinhole resistance

The laminate film obtained in the above was cut into a size of 20.3 cm×27.9 cm, and the rectangular test film (laminate film) obtained by the cutting was left and conditioned for not less than 24 hours under a condition of a temperature of 23°C and a relative humidity of 50%. Then, the rectangular test film was wound into a cylindrical shape having a length of 20.32 cm. Next, one end of the cylindrical film was fixed to the outer periphery of a disc-shaped fixed head of a gelbo flex tester (manufactured by Rigaku Industrial Corporation, NO. 901 Model) (according to the standard of MIL-B-131C), and then, the other end of the cylindrical film was fixed to the outer periphery of a disc-shaped movable head of the tester opposed to the fixed head with a gap of 17.8 cm therebetween. Then, a bending test was performed repeatedly and continuously for 2000 cycles at a speed of 40 cycles per minute. One cycle of the bending test consisted of the following: while the movable head was moved by 7.6 cm in the direction toward the fixed head along an axis between both heads opposed to each other in parallel, the movable head was rotated by 440°; then, the movable head was linearly moved by 6.4 cm without rotation; and then, these actions were reversed to move the movable head back to the initial position. Then, the cylindrical test sample was removed from the heads, and the number of pinholes generated in the portion, in 17.8 cm×27.9 cm, of the rectangular film obtained by cutting and opening the joined portion, excluding the portions fixed to the outer peripheries of the fixed head and the movable head, was counted by the following method (i.e., the number of pinholes per 497 cm$^2$ was counted). The test film was placed, with the L-LDPE film side faced downward, on a filter paper (ADVANTEC. Co. Ltd., No. 50), and the four corners were fixed with Cellotape (registered trademark). An ink (obtained by diluting 5-fold an ink manufactured by PILOT Corporation (product number: INK-350-blue) with pure water) was applied on the test film, and was spread over by using a rubber roller. Unnecessary ink was wiped off, and the test film was removed, and then, the number of dots of the ink on the filter paper was counted.

(10) Preservation stability test

<Production of packaging bag>

The laminate films obtained in the above were superposed with each other, with the linear low density polyethylene film sides thereof facing inside, to produce a three-sided seal bag having inside dimensions of a width of 15 cm and a height of 19 cm.

<Production of coloration liquid>

7 parts by mass of agar and 0.04 parts by mass of methylene blue were added to 2000 parts by mass of water, and were dissolved in hot water at 95°C. Further, 1.2 parts by mass of hydrosulfite ($Na_2S_2O_4$) was added and mixed under a nitrogen atmosphere to obtain a colorless solution.
Under a nitrogen atmosphere, 250 ml of the coloration liquid produced in (b) above was put in the three-sided seal bag produced in (a) above, and while removing the gas in the bag, an upper portion of the bag was sealed, to obtain a bag having inside dimensions of a width of 15 cm and a height of 15 cm.
- The obtained bag was left at room temperature for three hours to solidify the agar, and then, was preserved under a condition of 40°C and a humidity of 90%. The coloration state of the methylene blue agar solution in the bag after two weeks was observed. The evaluation method was as follows. **"A" or "B" denotes** that there is no problem for practical use.

  A: no discoloration
  B: very slightly discolored to blue
  C: slightly discolored to blue
  D: discolored to blue

(11) Vibration durability test

Using the packaging bag containing the methylene blue coloration liquid produced in (a) to (d) above, a shaking test was performed according to the following method. 20 packaging bags to be subjected to the test were placed per cardboard box, and the cardboard box was set in a shaking test apparatus. The cardboard box was shaken for 24 hours under a condition of: 23°C; shaking in the horizontal direction; a stroke width of 5 cm; and a number of times of shaking of 120 times/minute. Then, the cardboard box was preserved under a condition of 40°C and a humidity of 90%, and the coloration state of the methylene blue agar solution in the bag after three days was observed. The evaluation method was as follows. **"A"** or **"B" denotes** that there is no problem for practical use.

  A: no discoloration
  B: very slightly discolored to blue
  C: slightly discolored to blue
  D: discolored to blue

(12) Relative viscosity (RV) of polyamide resin

0.25 g of a sample was dissolved in 25 ml of 96% sulfuric acid to make solution, and using 10 ml of the solution, the number of seconds for the solution to fall at 20°C was measured using an Ostwald viscosity tube. The relative viscosity was calculated according to the formula below.

$$RV = t/t_0$$

where $t_0$: the number of seconds it took for the solvent to fall, and $t$: the number of seconds it took for the sample solution to fall.

[Example 1]

T-die equipment for two-kind and three-layer co-extrusion was used, and an unstretched sheet having the following configuration was obtained. In the configuration of layer B/layer A/layer B, the total thickness of the **unstretched sheet was 190 μm, the thickness** ratio of each layer relative to the total thickness was layer B/layer A/layer B =40%/20%/40%, the extrusion resin temperature of the layer A was 270°C, and the extrusion resin temperature of the layer B was 260°C. Composition forming the layer A: a composition formed of 100 parts by mass of poly(m-xylylene adipamide) (manufactured by MITSUBISHI GAS CHEMICAL COMPANY, INC., RV=2.65). Composition forming the layer B: a composition formed of 91 parts by mass of polyamide 6 (manufactured by Toyobo Co., Ltd., RV=2.8); 4 parts by mass of polyamide 11 (manufactured by Zig Sheng Industrial Co., Ltd., RV2.5, melting point 186°C) as the polyamide resin polymerized from a biomass-derived raw material; 0.54% by mass of porous silica fine particles (manufactured by FUJI SILYSIA CHEMICAL LTD., average particle **diameter 2.0 μm, pore volume 1.6 ml/g); and 0.15% by mass of fatty acid bisamide (ethylene** bisstearamide manufactured by KYOEISHA CHEMICAL Co., LTD.).

The obtained unstretched sheet was stretched 3.3 times in the lengthwise direction at a stretching temperature of 85°C by rolls, and then was stretched 3.7 times in the transverse direction at a stretching temperature of 120°C by a tenter. Further, the resultant sheet was subjected to heat setting at a temperature of 215°C and 5% thermal relaxation treatment, to **produce a biaxially stretched film having a thickness of 15 μm. Further,** corona discharge treatment was performed on the surface of layer B on the side to be dry-**laminated with 40 μm of** a linear low density polyethylene film (L-LDPE film: manufactured by Toyobo Co., Ltd., L6102). Physical properties of the obtained biaxially stretched film, and laminate strength, oxygen permeability, and bending pinholes of the laminated body produced from the obtained film were measured. Further, tests regarding preservation stability and vibration durability of the packaging bag were performed. Table 1 shows the results.

[Examples 2 to 9, Comparative Examples 1 to 4]

A biaxially stretched film was obtained in the same manner as in Example 1, except that the thickness and the raw material composition of the layer A and the layer B in Example 1 were changed as in Table 1.

Polyamide 410, polyamide 610, and polyamide 1010, which are a polyamide resin polymerized from a biomass-derived raw material, were used respectively, as follows.

Polyamide 410: (manufactured by DSM, ECOPaXX Q150-E, melting point 250°C)

Polyamide 610: (manufactured by Arkema, RilsanS SMNO, melting point 222°C)

Polyamide 1010: (manufactured by Arkema, RilsanT TMNO, melting point 202°C)

Table 1 shows evaluation results of the obtained biaxially stretched films.

[Table1]

| | | | Example | | | | | | | | | Comparative Example | | | | |
|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 |
| Composition of the layer A (core layer) | Polyamide MXD6 | % by mass | 100 | 100 | 100 | 100 | 100 | 99 | 100 | 100 | 100 | 100 | 100 | 100 | 100 | 100 |
| | Polyamide 6 | % by mass | - | - | - | - | - | - | - | - | - | - | - | - | - | - |
| | Polyamide elastomer | % by mass | - | - | - | - | - | 1 | - | - | - | - | - | - | - | - |
| Composition of the layer B (skin layer) | Polyamide 6 | % by mass | 90.4 | 64.6 | 79.5 | 79.5 | 79.5 | 79.5 | 79.5 | 79.5 | 79.5 | 94.3 | 54.6 | 54.6 | 59.6 | 79.5 |
| | Polyamide 11 | % by mass | 4.0 | 29.8 | 14.9 | 14.9 | 14.9 | 14.9 | - | - | - | - | 39.7 | 39.7 | 34.8 | 14.9 |
| | Polyamide 410 | % by mass | - | - | - | - | - | - | 14.9 | - | - | - | - | - | - | - |
| | Polyamide 610 | % by mass | - | - | - | - | - | - | - | 14.9 | - | - | - | - | - | - |
| | Polyamide 1010 | % by mass | - | - | - | - | - | - | - | - | 14.9 | - | - | - | - | - |
| | Polyamide elastomer | % by mass | 5.0 | 5.0 | 5.0 | 5.0 | 5.0 | 5.0 | 5.0 | 5.0 | 5.0 | 5.0 | 5.0 | 5.0 | 5.0 | 5.0 |
| | Fine particle | % by mass | 0.54 | 0.54 | 0.54 | 0.54 | 0.54 | 0.54 | 0.54 | 0.54 | 0.54 | 0.54 | 0.54 | 0.54 | 0.54 | 0.54 |
| | Fatty acid amide | % by mass | 0.15 | 0.15 | 0.15 | 0.15 | 0.15 | 0.15 | 0.15 | 0.15 | 0.15 | 0.15 | 0.15 | 0.15 | 0.15 | 0.15 |
| Total thickness | | μm | 15 | 15 | 15 | 15 | 15 | 15 | 15 | 15 | 15 | 15 | 15 | 15 | 15 | 15 |
| Thickness of core layer | | μm | 3 | 3 | 3 | 1.5 | 4.5 | 4.5 | 3 | 3 | 3 | 3 | 3 | 5 | 1.5 | 1 |
| | | % | 20 | 20 | 20 | 10 | 30 | 30 | 20 | 20 | 20 | 20 | 20 | 33 | 10 | 7 |
| Lamination configuration | | — | B/A/B | B/A/B | B/A/B | B/A/B | B/A/B | B/A/B | B/A/B | B/A/B | B/A/B | B/A/B | B/A/B | B/A/B | B/A/B | B/A/B |
| Haze | | % | 3.5 | 3.6 | 3.5 | 3.2 | 3.0 | 3.2 | 3.0 | 3.0 | 3.0 | 3.5 | 4.1 | 5.5 | 3.6 | 3.6 |
| Dynamic friction coefficient | | — | 0.4 | 0.4 | 0.4 | 0.4 | 0.4 | 0.4 | 0.4 | 0.4 | 0.4 | 0.4 | 0.4 | 0.4 | 0.4 | 0.4 |
| Impact strength | | J/15μm | 1.1 | 0.9 | 1.1 | 1.1 | 1.1 | 1.1 | 1.0 | 1.0 | 1.1 | 1.1 | 0.8 | 1.0 | 0.9 | 0.9 |
| Biomass degree | | % | 3 | 24 | 12 | 13 | 10 | 10 | 12 | 12 | 12 | 0 | 32 | 26 | 31 | 31 |
| Pinhole resistance | | piece | 8 | 5 | 7 | 5 | 9 | 4 | 8 | 9 | 7 | 15 | 4 | 16 | 8 | 7 |
| Heat shrinkage rate | MD | % | 1.1 | 1.2 | 1.1 | 1.2 | 1.2 | 1.3 | 1.2 | 1.2 | 1.2 | 1.1 | 1.5 | 1.2 | 1.1 | 1.1 |
| | TD | % | 1.5 | 1.6 | 1.5 | 1.3 | 1.4 | 1.5 | 1.4 | 1.4 | 1.4 | 1.5 | 1.7 | 1.1 | 1.0 | 1.0 |
| Laminate strength | MD | N/mm | 7.3 | 7.6 | 7.4 | 7.3 | 7.0 | 7.2 | 7.4 | 7.5 | 7.5 | 7.2 | 7.8 | 7.2 | 7.3 | 7.5 |
| | TD | N/mm | 7.2 | 7.5 | 7.4 | 7.2 | 6.9 | 7.1 | 7.4 | 7.3 | 7.3 | 7.2 | 7.6 | 7.3 | 7.2 | 7.3 |
| Oxygen permeability | | ml/m²·MPa·day | 94 | 120 | 95 | 122 | 81 | 85 | 94 | 96 | 97 | 95 | 152 | 91 | 160 | 175 |
| Preservation stability | | — | A | A | A | A | A | A | A | A | A | A | B | A | B | B |
| Vibration durability | | — | A | A | A | A | B | A | A | A | A | A | B | C | A | A |

As shown in Table 1, the films of Examples had low haze and thus good transparency, and were also excellent in impact strength. The laminated bodies using the films of Examples had high laminate strength with a sealant film, and were excellent in oxygen barrier property, preservation stability, and vibration durability.

The polyamide film of Comparative Example 1 uses only polyamide resins polymerized from conventional fossil fuel-derived raw materials. Although good characteristics can be obtained, the polyamide film of Comparative Example 1 cannot be said to be a carbon-neutral biaxially stretched polyamide film.

The polyamide film of Comparative Example 2 contains too much polyamide 11 polymerized from a biomass-derived raw material and having a low melting point, and thus, orientation collapsed due to heat treatment, and impact resistance decreased. In addition, the oxygen barrier property was deteriorated.

With respect to the polyamide film of Comparative Example 3, the thickness of the layer A (core layer) was increased in association with increase in the addition amount of polyamide 11 polymerized from a biomass-derived raw material and having a low melting point, whereby the oxygen barrier property was improved. However, the pinhole resistance was deteriorated.

With respect to the polyamide film of Comparative Example 4, the layer A (core layer) was made thin, and the addition amount of polyamide 11 polymerized from a biomass-derived raw material in the layer B was increased, whereby the biomass degree was made high. The obtained film had deteriorated oxygen barrier property.

With respect to the polyamide film of Comparative Example 5, the layer A (core layer) was further made thinner. The addition amount of polyamide 11 polymerized from a biomass-derived raw material in the layer B was about 15% by mass, but the oxygen barrier property was bad.

INDUSTRIAL APPLICABILITY

The biaxially stretched polyamide film of the present invention is blended with a polyamide resin polymerized from a specific raw material derived from biomass (plant, etc.), and has adopted a specific layer configuration and a specific film forming condition. Accordingly, a carbon-neutral polyamide film using a resin of which the raw material is derived from biomass can be obtained. In addition, the biaxially stretched polyamide film has excellent oxygen gas barrier property, good impact resistance, and good bending fatigue resistance, is effective for prevention of alteration and discoloration of contents in food packaging and the like, further, can protect contents from bending fatigue due to impact and vibration during transportation, can be effectively used as various packaging materials, and thus, significantly contributes to development of industries.

**Claims**

1. A biaxially stretched polyamide film in which a resin layer (layer B) mainly composed of an aliphatic polyamide resin is laminated on at least one surface of a resin layer (layer A) mainly composed of a m-xylylene group-containing-polyamide polymer that has m-xylylene diamine or a mixed xylylene diamine composed of m-xylylene diamine and p-xylylene diamine, as a main diamine component, and that **has an** $\alpha,$ $\omega$-aliphatic dicarboxylic acid component having 6 to 12 carbon atoms, as a main dicarboxylic acid component,
   wherein the biaxially stretched polyamide film satisfies the following requirements (1) to (3):

   (1) the resin layer (layer A) mainly composed of the m-xylylene group-containing-polyamide polymer contains not lower than 70% by mass of the m-xylylene group-containing-polyamide polymer;
   (2) the resin layer (layer B) mainly composed of the aliphatic polyamide resin contains at least 99 to 60% by mass of polyamide 6 and 1 to 34% by mass of a polyamide polymerized from a biomass-derived raw material; and
   (3) a thickness of the layer A is not lower than 10% and not higher than 30% of a total thickness of the layer A and the layer B.

2. The biaxially stretched polyamide film according to claim 1, wherein
   a content (biomass degree) of biomass-derived carbon, according to radiocarbon ($C^{14}$) measurement, relative to all carbon in the biaxially stretched polyamide film is 0.5 to 30%.

3. The biaxially stretched polyamide film according to claim 1 or 2, wherein
   a polyamide resin polymerized from the biomass-derived raw material is at least one type of polyamide resin selected from the group consisting of polyamide 11, polyamide 410, polyamide 610, and polyamide 1010.

4. The biaxially stretched polyamide film according to any one of claims 1 to 3, wherein
   **the biaxially stretched polyamide film has a thickness of 8 to 50 $\mu$m**.

5. A laminated body in which a sealant film is laminated on the biaxially stretched polyamide film according to any one of claims 1 to 4.

6. The laminated body according to claim 5, wherein
   the number of pinholes when a bending test is continuously performed for 2000 cycles at a speed of 40 cycles per minute using a gelbo flex tester under an atmosphere having a temperature of 23°C and a relative humidity of 50% is not larger than 10.

7. The laminated body according to claim 5 or 6, wherein
   oxygen permeability at a temperature of 23°C and a relative humidity of 65% is not higher than 150 ml/m$^2$·MPa·day.

8. A packaging bag using the laminated body according to any one of claims 5 to 7.

## INTERNATIONAL SEARCH REPORT

| | International application No. |
|---|---|
| | PCT/JP2020/032244 |

A. CLASSIFICATION OF SUBJECT MATTER
Int.Cl. B32B27/34(2006.01)i, B65D65/40(2006.01)i, C08L77/02(2006.01)i,
C08L77/06(2006.01)i
FI: B32B27/34, C08L77/02, C08L77/06, B65D65/40D
According to International Patent Classification (IPC) or to both national classification and IPC

B. FIELDS SEARCHED

Minimum documentation searched (classification system followed by classification symbols)
Int.Cl. B32B1/00-43/00, B65D65/00-65/46, C08K3/00-13/08, C08L1/00-101/14

Documentation searched other than minimum documentation to the extent that such documents are included in the fields searched
| Published examined utility model applications of Japan | 1922-1996 |
|---|---|
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-120721 A (TOYOBO CO., LTD.) 07 July 2016 (2016-07-07) | 1-8 |
| A | JP 2001-158069 A (TOYOBO CO., LTD.) 12 June 2001 (2001-06-12) | 1-8 |
| A | JP 2010-149476 A (TOYOBO CO., LTD.) 08 July 2010 (2010-07-08) | 1-8 |
| A | JP 2002-347195 A (UNITIKA LTD.) 04 December 2002 (2002-12-04) | 1-8 |
| A | WO 2017/115685 A1 (MITSUBISHI GAS CHEMICAL COMPANY, INC.) 06 July 2017 (2017-07-06) | 1-8 |
| A | JP 2012-41527 A (UBE INDUSTRIES, LTD.) 01 March 2012 (2012-03-01) | 1-8 |
| A | JP 2018-196933 A (UBE INDUSTRIES, LTD.) 13 December 2018 (2018-12-13) | 1-8 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 October 2020 | 10 November 2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/032244

C (Continuation).    DOCUMENTS CONSIDERED TO BE RELEVANT

| Category* | Citation of document, with indication, where appropriate, of the relevant passages | Relevant to claim No. |
|---|---|---|
| A | JP 10-95086 A (KUREHA CHEMICAL IND CO., LTD.) 14 April 1998 (1998-04-14) | 1-8 |
| A | JP 2008-509021 A (E. I. DU PONT DE NEMOURS AND COMPANY) 27 March 2008 (2008-03-27) | 1-8 |

Form PCT/ISA/210 (second sheet) (January 2015)

| JP 2016-120721 A | 07 July 2016 | US 2013/0323485 A1 |
| | | EP 2682252 A1 |
| | | TW 201238748 A |
| | | CN 103402737 A |
| | | KR 10-2014-0007884 A |
| | | KR 10-2018-0135989 A |
| JP 2001-158069 A | 12 June 2001 | (Family: none) |
| JP 2010-149476 A | 08 July 2010 | (Family: none) |
| JP 2002-347195 A | 04 December 2002 | (Family: none) |
| WO 2017/115685 A1 | 06 July 2017 | US 2019/0010328 A1 |
| | | EP 3398995 A1 |
| | | CN 108137923 A |
| | | KR 10-2018-0099633 A |
| | | TW 201736434 A |
| JP 2012-41527 A | 01 March 2012 | (Family: none) |
| JP 2018-196933 A | 13 December 2018 | (Family: none) |
| JP 10-95086 A | 14 April 1998 | (Family: none) |
| JP 2008-509021 A | 27 March 2008 | US 2006/0029822 A1 |
| | | EP 1773590 A1 |
| | | CN 101001750 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6255054 A
- JP 2003011307 A
- JP 2001341253 A

- JP 2006205711 A
- JP 2009119843 A
- JP 2012097163 A